Europäisches Patentamt

European Patent Office

Office européen des brevets

(11) Publication number: **0 342 743**
**A1**

## (12) EUROPEAN PATENT APPLICATION

(21) Application number: **89201191.7**

(51) Int. Cl.⁴: **A01G 31/00**

(22) Date of filing: **11.05.89**

(30) Priority: **19.05.88 NL 8801299**

(43) Date of publication of application:
**23.11.89 Bulletin 89/47**

(84) Designated Contracting States:
**AT BE CH DE ES FR GB GR IT LI LU NL SE**

(71) Applicant: **Stork Perforated Products B.V.**
**Raamstraat 1-3**
**NL- 5831 AT Boxmeer(NL)**

(72) Inventor: **Dresen, Robert Arthur Gerard**
**16, Hertogstraat**
**NL-6584 AN Molenhoek(NL)**

(74) Representative: **van der Kloet-Dorleijn,**
**Geertruida W.F., Drs. et al**
**EXTERPATENT B.V. P.O. Box 90649**
**NL-2509 LP The Hague(NL)**

(54) **Plastic substrate.**

(57) A plastic substrate for rooting and/or growing
plants is described, wherein said substrate com-
prises at least two layers (1) and (2) of plastic film
with spacers (3) preventing airtight adhesion of opposite film layers, while at least one of the layers (1,
2) is perforated. Preferably, said spacers consist of
bulges (7) present in at least one film, whereas at
least part of the spacers is provided with perforations
(8). The substrate is expediently made of a thermo-
plastic material. A process for the production of a
plastic substrate for rooting and/or growing of plants
is also described, said process being characterized
in that a substrate is formed in a manner known per
se from at least two layers of plastic film (1, 2) with
spacers (3, 7) preventing airtight adhesion of op-
posite film layers.

FIG.1.

**Plastic substrate.**

The invention relates to a plastic substrate for rooting and/or growing of plants.

For various reasons a special rooting medium is used to replace the natural soil for growing plants. In the main, materials such as peat, rock wool or foam products of synthetic organic origin are used for this. In practice this is known as substrate culture. Where rock wool and foam products are used, this method of growing produces large quantities of waste polluted with substantial quantities of plant nutrients. The processing of this waste is very expensive.

Processes are also known in which the cultivated plants are not grown on natural soil either, but are rooted exclusively in containers of water, or sometimes on through-type surfaces over which a constant film of water flows. These water cultures or water film cultures can give the maximum production yields due to their precise controllability.

A disadvantage of this known system is, however, that extensive technical provisions are necessary to enable one to maintain the accuracy as regards growing conditions even after some time has elapsed. This makes this type of culture expensive.

Another disadvantage of this growing method is that only very few or no holding points are available for the roots. This means that the plants to be grown have to be supported right from the beginning of the growing period. Technical provision are, of course, required for this.

The aim of substrate culture is, on the one hand, to achieve or approach the yield level of water or water film culture but, on the other hand, to reduce the necessity for the usual careful regulation of the growing conditions, and to provide the plants with a rooting medium by means of which they can develop without support at least for a longer period after the start of growth.

In water culture, water film culture and in substrate culture the plant can be provided with nutrients only through the water added. For this, the necessary chemical substances are added to the water. The water is thus at the same time a nutrient liquid, which is another reason why a good and uniform nutrient liquid supply is important. In practice, experience has been good with substrate culture, and it is used on a large scale. The top yields of water culture and water film culture have not, however, been achieved in general. The reason for this should be sought particularly in a number of disadvantages connected with the buffer function of the substrate mass.

The substrate material gains its buffer function through its ability to retain water in the manner known of a sponge. This means that, as a result of the laws of gravity acting on the water, the bottom part of the substrate contains more water than the parts higher up (constantly decreasing quantity as one approaches the top layer). That means, for example, that in the case of a substrate thickness of 7 cm, known in practice, approximately 80% of the total quantity of water is present in the bottom 3.5 cm of the substrate. Ideal growing conditions for the roots of a plant in a substrate are, however, those in which the water/air ratio is 1:1. In the above-mentioned substrates this ratio is therefore met in a very small, fairly high up part of the substrate, and the zone depth and place also varies due to the addition of fresh nutrient liquid in batches. Due to the fact that the quantity of liquid to be added is equal to the consumption of the plants plus the evaporated quantity, there will be a constant supply of the nutrient liquid in the substrate mass. This liquid is, however, subject to ageing, i.e. the oxygen content and of course also the concentration of nutrients in the liquid phase drop.

Efforts are made to supplant this ageing water mass to some extent by an "overdose" of fresh liquid. If this supplanted aged liquid is not collected and conditioned for re-use, which is often not carried out in view of the costs involved, this liquid can only be drained as a worthless material into the surface water and, due to the high concentration of nutrients, salts and reaction products, contributes to the pollution of the surface water.

The object of the invention is to eliminate the disadvantages of the known plastic substrates for rooting and/or growing plants.

This object is achieved according to the invention in that the substrate comprises at least two layers of plastic film with spacers preventing airtight adhesion of opposite film layers, while at least one of the layers is perforated.

The thickness of the substrate required for rooting and/or growing of plants can be adapted to a desired volume for the plant roots by placing several layers on top of each other.

The spacers are preferably bulges present in at least one film. The distance between the bulges must, of course, be such that no film layers adhering to each other and shutting off the air can occur.

It was found to be expedient if the height of the spacers is 0.3-10 mm, preferably 1-3 mm.

The liquid applied to this film mass will pass through the apertures and spread uniformly as a thin liquid film over the composite layers of the mass, with the result that the substrate largely acquires the beneficial water/air ratio of 1:1. Since the films mass has a very limited liquid storage capacity by comparison with the known substrates, the quantity of ageing liquid will also be low. Even if an overdose is given the residues running through will be mainly fresh liquid, and will thus be more suitable for re-use. Due to the low storage cpacity of the liquid, fresh liquid can also be given without any problem 24 hours a day, without any risk of over-saturation of the substrate mass. As in the case of water film culture, this means that the roots can be in a constant flow of fresh liquid all day, with a maximum beneficial water/air ratio without level fluctuations in the water/air zone.

The plastic substrate according to the invention permits the use of a cheaper and less sensitive measuring and control system when this type of substrate is used as a nutrient base for plants. Furthermore, particularly when several layers are used, the roots have a large surface at their disposal to give them sufficient hold, so that the plant will be able to grow without support for a longer period from the start of growth.

The perforations must be big enough for a constriction-free passage of the fully grown roots, and must be at a distance from each other which is necessary for a good spread of the roots of the plants to be grown.

The plastic substrate according to the invention has the advantage that, due to the fact that it is made up of films, the substrate remains unchanged through use and few or no nutrients or salts are left in the substrate. The substrate can therefore be re-used, after cleaning cycles if necessary. This constitutes an additional advantage over the materials used hitherto, such as rock wool, which generally has to be thrown away after use, because the recycling costs of it are much the same as the production costs, and recycled rock wool is also lower in quality. Throwing away this used material is, however, very harmful to the environment, due to the leaching out of nutrient liquid residues or salts still present into the ground water.

In the plastic substrate according to the invention the bulges and perforations are preferably provided in a specific pattern, which is preferably symmetrical.

Bulged perforation patterns, in which the perforations have cross sections from approx 100 $\mu$m to 1500 $\mu$m, can advantageously be used. The shape of the perforations is in no way limited, and can be round, square, pentagonal or hexagonal, while the bulge can be, for example, rectangular or conical in cross section.

The plastic film to be used for the plastic substrate is advantageously a thermoplastic film. Such a film is in fact easily shaped into a substrate. The use of a thermoplastic material for the production of a substrate also has the advantage that the various layers of the substrate can be welded together locally, for example at the edges of the film layers. This prevents the layers of the substrate from slipping relative to each other, which would cause the developing roots to break off.

The invention also relates to a process for producing a plastic substrate for rooting and/or growing plants which is characterized in that a substrate is formed in a manner known per se, consisting of at least two layers of plastic film with spacers preventing airtight adhesion of opposite film layers.

The invention also relates to a process for rooting and /or growing plants using a plastic substrate, which is characterized in that a substrate according to the invention is used.

The invention will now be explained in greater detail with reference to the examples of embodiments which follow and the appended drawing, in which

Fig. 1 shows an embodiment of a plastic substrate according to the invention,

Fig. 2 shows another embodiment of a plastic substrate according to the invention,

Figs. 3 and 4 show cross-sections through a part of such plastic substrates.

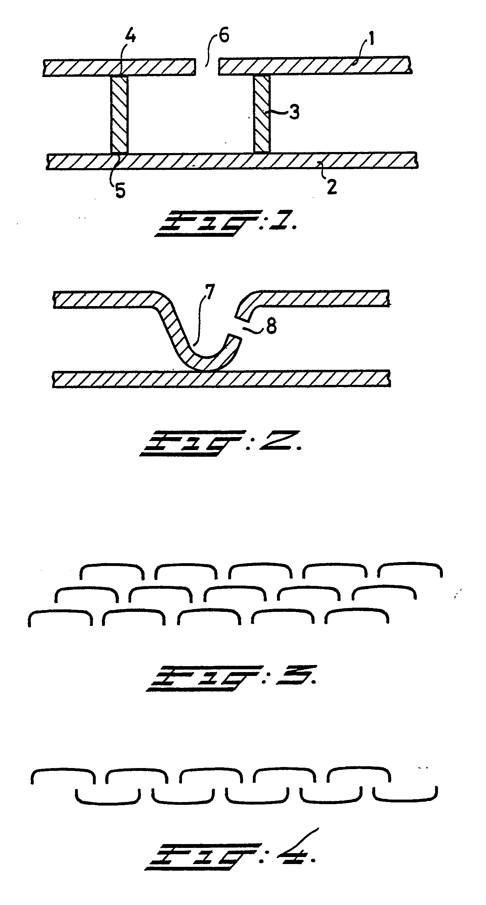

Fig. 1 shows an embodiment of a plastic substrate comprising two layers of plastic film (1) and (2). Spacers in the form of reinforcement ribs (3) are disposed between these layers. A connection between the layers can be made by any suitable method at any time, before or after placing of the film layers on top of each other. Where a thermoplastic film is used the connection can be made under the influence of heat, in connecting areas such as areas 4 and 5.

The presence of spacers in the form of, for example, the reinforcement ribs shown in Fig. 1, gives rise to a substrate in which the plants to be grown can develop without support for a long time after the start of growth. Besides, with the use of the present substrate no nutrient liquid which is subject to ageing is left behind, due to the fact that there are no areas at all which are difficult to reach. In the plastic substrate shown in Fig. 1 the plastic film layer 1 is provided with a perforation 6. The diameter of the perforation mus be selected depending on the plant to be grown, but it is generally 100-1500 $\mu$m. The distance between the film layers is determined by the length of the spacers, which is generally 0.3-10 mm, more particularly 1-3 mm. Although a plastic substrate made up of two layers is shown in Fig. 1, the substrate used in practice can be made up of a larger number of layers, depending on the desired substrate thickness.

Fig. 2 shows a variant embodiment of a plastic substrate according to the invention. The spacers in this embodiment are present in the form of bulges 7 in at least one plastic film layer. Although only one perforation 8 is shown, several perforations, if desired in a particular pattern, can of course be provided.

Figs. 3 and 4 show cross sections through a part of a plastic substrate according to the invention.

In the embodiment shown in Fig. 3 the successive layers with spacers in the form of perforated bulges are placed above each other in such a way that the spacers of a plastic film layer are directed towards the top side of a layer below it.

In the embodiment shown in Fig. 4, on the other hand, two layers of a plastic film are shown, the layers with the spacers provided with perforations being placed inverted relative to each other. This layout has the advantage that anchoring of the layers to each other is also obtained.

Of course, it is possible to form a substrate in which both the positioning of the layers shown in Fig. 3 and that in Fig. 4 are present.

The invention is also explained with reference to the following examples of embodiments.

Example 1

Webs of a thermoplastic film several metres long and approximately 3 metres wide were provided with bulges and rolled up until a packet approx. 7 cm wide was produced. Two of such packets were placed side by side, thereby producing a "processed" film surface area of approx. 6 $m^2$ per linear metre of substrate mat.

This thus formed substrate mat was provided with a nutrient liquid supply by means of fixed rods with perforations at the point of the envisaged development and growth of the plant roots. The substrate was also provided with additional perforations in order to create a root guide and holding base.

A plant growing experiment, carried out over a period of approx. 1 year, with the substrate thus formed, gave results which correspond to the earlier mentioned water culture and water film culture.

Example 2

A substrate mat was formed from film material by placing alternately unperforated, flat webs and webs with bulged perforations on top of each other up to the desired thickness.

Such a substrate mat also produced particularly good growing results.

Example 3

Webs of a thermoplastic film several metres long were provided with perforated spacers and rolled up until a packet approx. 7 cm wide was produced. Two of such packets were placed side by side, in a container provided with a vertical channel, and made of a liquid-tight plastic film. The depth of the channel was 7-12 cm. The channel depth ensured rapid discharge of superfluous nutrient liquid, so that the plant roots were always in fresh nutrient liquid.

Such a substrate produced particularly good growing results.

**Claims**

1. Plastic substrate for rooting and/or growing plants, **characterized in that** the substrate comprises at least two layers (1) and (2) of plastic film with spacers (3) preventing airtight adhesion of opposite film layers, while at least one of the layers (1, 2) is perforated.

2. Plastic substrate according to Claim 1, **characterized in that** the spacers consist of bulges (7) present in at least one film.

3. Plastic substrate according to Claim 1 or 2, **characterized in that** at least part of the spacers is provided with perforations (8).

4. Plastic substrate according to Claims 1-3, **characterized in that** the bulges (7) and perforations (8) are disposed according to a particular, preferably symmetrical pattern.

5. Plastic substrate according to Claims 1-4, **characterized in that** the perforations have a diameter of 100-1500 μm.

6. Plastic substrate according to Claims 1-5, **characterized in that** the height of the spacer is 0.3-10 mm.

7. Plastic substrate according to Claim 6, **characterized in that** the height of the spacers is 1-3 mm.

8. Plastic substrate according to Claims 1-7, **characterized in that** the substrate is made of a thermoplastic material.

9. Process for the production of a plastic substrate for the rooting and/or growing of plants, **characterized in that** a substrate is formed in a manner known per se from at least two layers (1, 2) of plastic film with spacers preventing airtight adhesion of opposite film layers.

10. Process for the production of a plastic substrate according to Claim 9, **characterized in that** at least one of the layers of the substrate is perforated.

11. Process for the rooting and/or growing of plants using a plastic substrate, **characterized in that** a substrate according to Claims 1-8 is used.

FIG:1.

FIG:2.

FIG:3.

FIG:4.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4 ) |
|---|---|---|---|
| A | EP-A-39747 (UNIVERSITY COLLEGE CARDIFF)<br>* page 2, line 1 - page 3, line 16; figures 1, 2 * | 1, 8, 9 | A01G31/00 |
| A | AT-B-312351 (SEMPERIT)<br>* the whole document * | 1, 8 | |
| | | | **TECHNICAL FIELDS SEARCHED (Int. Cl.4 )**<br><br>A01G<br>A01C |

The present search report has been drawn up for all claims

| Place of search | Date of completion of the search | Examiner |
|---|---|---|
| THE HAGUE | 14 AUGUST 1989 | HERYGERS J.J. |

EPO FORM 1503 03.82 (P0401)